# EUROPEAN PATENT APPLICATION

(11) **EP 4 756 764 A1**
(43) Date of publication of application: **10.06.2026**
(21) Application number: 24217301.1
(22) Date of filing: 03.12.2024
(51) Int. Cl.: G08B 13/196

(54) **SECURITY MONITORING SYSTEM**

(71) Applicant: Verisure Sàrl, 1290 Versoix (CH)
(72) Inventor: Hackett, Nicolas, 1290 Versoix (CH); Piedbois, Julien, 1290 Versoix (CH)
(74) Representative: Hansson Thyresson AB

(57) **Abstract**

There is provided a method of operating a security monitoring system of a premises, the method comprising: identifying an object by an imaging means arranged in an exterior part of the premises; detecting a movement of the object in dependence on one or more images from the imaging means; and transmitting an alert signal to one or more devices.

## Description

### TECHNICAL FIELD

The present invention relates to a security monitoring system, and in particular a security monitoring system with object monitoring capabilities, and to methods of operating the same.

### BACKGROUND

Security installations that are or include security monitoring systems for monitoring premises (e.g. a building such as a home), often referred to as alarm systems, typically provide means for detecting the presence and/or actions of people at premises and reacting to detected events.

Commonly, such systems include sensors to detect opening and closing of doors and/or windows to provide a secure perimeter to the premises, creating one or more protected interior spaces, movement detectors to monitor spaces (both within and outside buildings) for signs of movement, microphones to detect sounds such as breaking glass, and image sensors to capture still or moving images of monitored zones. In particular, the sensors may be arranged to monitor an area of the premises (including an exterior area) and detect an unauthorized intruder entering or moving within or around the premises.

Such systems may be self-contained, with alarm indicators such as sirens and flashing lights that may be activated in the event of an alarm condition being detected. Alternatively, or additionally, such systems may be linked to a remote monitoring centre where, typically, human operators manage the responses required by different alarm and notification types.

Hence, the security monitoring systems can alert a user (e.g. a homeowner) or an operator (e.g. at a remote monitoring centre or at the emergency services) that an undesirable security or safety event has occurred. Accordingly, such security monitoring systems contribute to the safety and wellbeing of occupants of the protected premises, as well as safeguarding articles within the protected perimeter - which may of course not simply be limited to a house or dwelling but may also extend to the grounds of the house, which may be protected by a boundary fence and gate, for example.

However, many users of security monitoring systems have various assets or objects, such as bicycles, outdoor furniture, barbeques or grills, lawnmowers, and the like which are commonly left unattended in a backyard or garden of the premises.

Embodiments of the present invention thus seek to provide enhanced security monitoring systems, and corresponding apps, methods and other implementations that improve the scope of security systems to address aspects of security and monitoring as well as providing new functionality and methods.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect, there is provided a method of operating a security monitoring system of a premises, the method comprising: identifying an object by an imaging means arranged in an exterior part of the premises; detecting a movement of the object in dependence on one or more images from the imaging means; and transmitting an alert signal to one or more devices.

The method is advantageous in that it provides enhanced monitoring of objects or assets located in a garden or other outdoor area of the premises. Hence, the method can detect if there is suspicious behavior involving these objects, and can alert a user if someone unauthorizedly moves or steals the object(s).

In some embodiments, the object is an object located in an exterior area of the premises.

In some embodiments, the object comprises one or more furniture pieces, one or more bicycles, one or more motorcycles, one or more vehicles, one or more barbeques, one or more grills, one or more lawnmowers, one or more cleaning robots for a swimming pool, one or more heat pumps, one or more ornaments, one or more packages, or any combination thereof.

In some embodiments, the alert signal is transmitted in response to the detected movement.

In some embodiments, the method further comprises determining if the movement is a movement of at least a predetermined distance.

In some embodiments, the alert signal is transmitted if it is determined that the movement is a movement of at least the predetermined distance.

In some embodiments, the method further comprises determining if the movement is a movement from a first zone of the exterior area to a second zone of the exterior area.

In some embodiments, the alert signal is transmitted if it is determined that the movement is a movement from the first zone to the second zone.

In some embodiments, the one or more devices comprise one or more devices of a remote monitoring centre, one or more user devices, one or more alarm indicators arranged in an interior or exterior part of the premises, or any combination thereof.

In some embodiments, the method further comprises: determining a current time of day, determining if the determined time of day is within a predefined time span, and selectively transmitting the alert signal to one or more first devices or one or more second devices in dependence on the determined time of day being within the predefined time span.

In some embodiments, the method comprises: receiving, from a user, a definition of the object to be identified and/or an object type to which the object to be identified belongs; and/or storing a definition of the object to be identified and/or an object type to which the object to be identified belongs.

In a second aspect, there is provided a security monitoring system for monitoring a premises, the system comprising at least one imaging means arranged in an exterior part of the premises, wherein the imaging means is configured to obtain one or more images of its field of view. The security monitoring system may be configured to: identify an object; detect a movement of the object in dependence on one or more images from the imaging means; and transmit an alert signal to one or more devices. Optionally, the object is an object located in an exterior area of the premises. Optionally, the object comprises one or more furniture pieces, one or more bicycles, one or more motorcycles, one or more vehicles, one or more barbeques, one or more grills, one or more lawnmowers, one or more cleaning robots for a swimming pool, one or more heat pumps, one or more ornaments, one or more packages, or any combination thereof.

In some embodiments, the system is configured to transmit the alert signal in response to the detected movement.

In some embodiments, the system is configured to determine if the movement is a movement of at least a predetermined distance.

In some embodiments, the system is configured to transmit the alert signal the movement is a movement of at least the predetermined distance.

In some embodiments, the system is configured to determine if the movement is a movement from a first zone of the exterior area to a second zone of the exterior area.

In some embodiments, the system is configured to transmit alert signal if the movement is a movement from the first zone to the second zone.

In some embodiments, the one or more device comprises one or more devices of a remote monitoring centre, one or more user devices, one or more alarm indicators arranged in an interior or exterior part of the premises, or any combination thereof.

In some embodiments, the system is further configured to: determine a current time of day, determine if the determined time of day is within a predefined time span, and selectively transmit the alert signal to one or more first devices or one or more second devices in dependence on the determined time of day being within the predefined time span.

In some embodiments, the system is further configured to: receive, from a user, a definition of the object to be identified and/or an object type to which the object to be identified belongs; and/or store a definition of the object to be identified and/or an object type to which the object to be identified belongs.

In some embodiments, the security monitoring system is configured to perform the method according to the first aspect.

In some embodiments, the system comprises a memory configured to store one or more definitions of one or more zones and/or boundaries within an exterior part of the premises.

In some embodiments, the system comprises a memory configured to store one or more characteristics or definitions of one or more objects and/or object types.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
- Fig. 1: is a schematic front view of a premises with a security monitoring system according to embodiments;
- Fig. 2: is a schematic plan view of a premises with a security monitoring system according to embodiments;
- Fig. 3: is a schematic view of an exterior part of the premises monitored by the security monitoring system according to embodiments; and
- Fig. 4: is a flowchart of a method of operating a security monitoring system according to embodiments.

Further, in the figures like reference characters designate like or corresponding parts throughout the several figures. The first digit in the reference character denotes the first figure in which the corresponding element or part appears.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the claimed invention.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. It is to be understood that elements and materials may be substituted for those illustrated and described herein, parts and processes may be reversed or omitted, certain features may be utilized independently, and embodiments or features of embodiments may be combined, all as would be apparent to the skilled person in the art.

The embodiments herein are provided by way of example so that this disclosure will be thorough and complete, and will fully convey the scope of the inventive concept, and that the claims be construed as encompassing all modifications, equivalents and alternatives of the present inventive concept which are apparent to those skilled in the art to which the inventive concept pertains. If nothing else is stated, different embodiments may be combined with each other.

Although reference may be made to directions (e.g. left, right, up, down, upper, lower) as shown in the figures, it will be appreciated that these references are purely for illustrative purposes, and that embodiments are not limited to such directions.

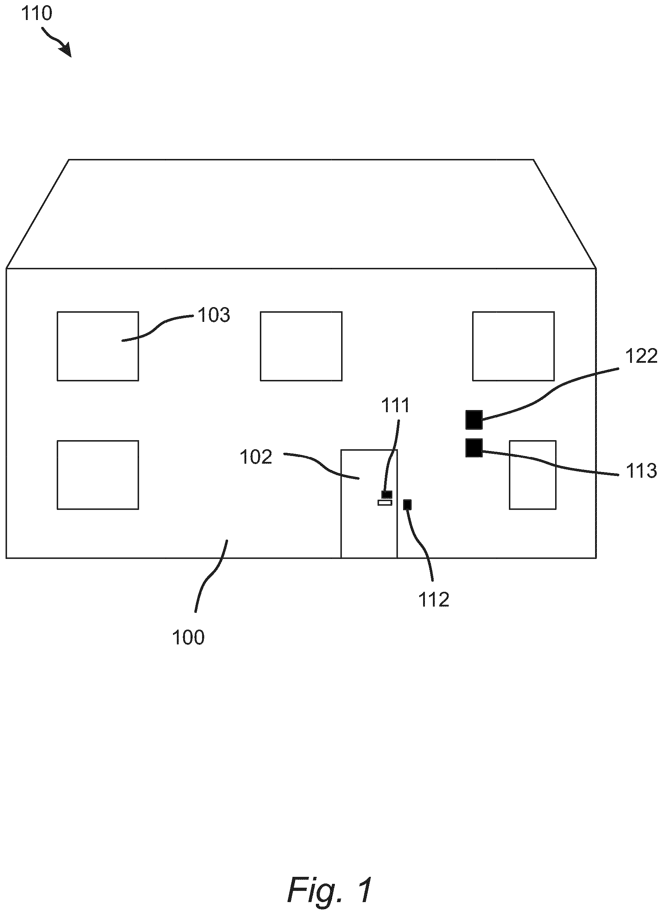

Fig. 1 shows a front view of a premises 100 protected by a security monitoring system 110 (which may also be referred to as an alarm system). The security monitoring system 110 is configured to monitor an interior and/or exterior area of the premises 100. In doing said monitoring, the security monitoring system 110 is configured to detect an alarm-incurring event such as an intruder entering the premises 100.

The premises 100 may be a residential building such as a house or an apartment, and/or a commercial building such as an office building, or the like. The premises 100 may have one or more exterior doors 102 and/or windows 103, such as the front door shown in Fig.1. The door 102 gives access to a protected interior of the premises 100. A door lock 111 may be provided on the exterior door 102, which may optionally be electrically controlled so that it can be locked and unlocked remotely. Optionally, as shown in Fig. 1, the façade of the house also carries an external keypad 112 by means of which a user can disarm the security monitoring system 110 and/or lock or unlock the door lock 111.

The security monitoring system 110 comprises one or more exterior imaging means 113, such as a camera (e.g. a video camera or a still image camera) or other image capturing device, configured to obtain still or moving images of an exterior of the premises. The exterior imaging means 113 may provide a live (video) stream of its field of view, or it may capture still or moving images.

The exterior imaging means 113 is arranged outside the building, i.e. at an exterior of the premises 100. The exterior imaging means 113 may be part of a video doorbell or may be provided as a stand-alone unit may be mounted to the façade or arranged remotely from the building (e.g. to include a part of the building in its field of view).

The exterior imaging means 113 may be associated with a movement detector, which may be separate from or may be integral with the exterior imaging means 113. The movement detector may be an infrared sensor such as a PIR sensor, a pixel movement sensor, a radar sensor, or any other suitable motion detection sensor.

The exterior imaging means 113 may be configured to be in an armed or disarmed state. In the armed state, the exterior imaging means 113 may be configured to capture or otherwise acquire images. In some embodiments, however, the exterior imaging means 113 may be configured to acquire images only when the movement detector has detected a movement, or it may be configured to capture or acquire images continuously. The exterior imaging means 113 may alternatively or additionally be configured to capture images in response to the audio interface capturing an audio signal.

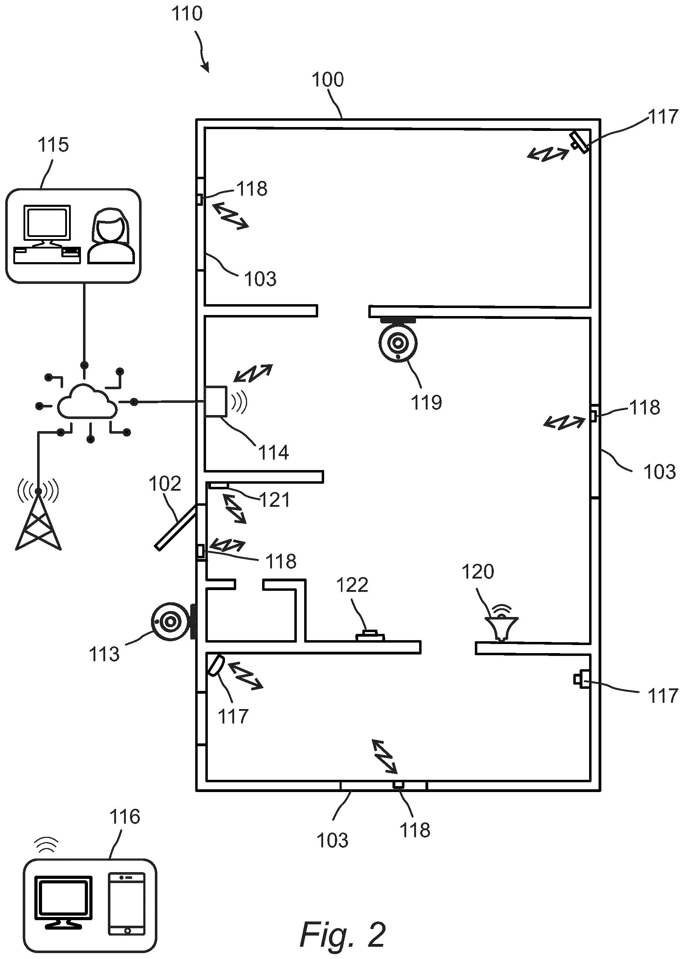

The exterior imaging means 113 may include an internal CPU, and/or be configured to communicate with a control unit 114 (shown in Fig. 2) of the security monitoring system 110 and/or a remote monitoring centre 115 (also shown in Fig. 2). In the case of the exterior imaging means 113 comprising an internal CPU, it may be configured to communicate directly with a user device 116 (shown in Fig. 2). In other cases, the exterior imaging means 113 may be configured to transmit data to the control unit 114, which in turn may be configured to communicate with the user device 116 and/or the remote monitoring centre 115.

The security monitoring system 110 may further comprise one or more audio interfaces 122 arranged in an exterior part of the premises. The audio interface 122 may comprise an audio input device, such as a microphone, configured to detect and/or record sound/audio in the environment where it is arranged. The audio interface 122 may be located in proximity to the exterior imaging means, and in some embodiments the audio interface 122 is part of the exterior imaging means 113. The security monitoring system may further comprise one or more additional audio interfaces 122 arranged in an interior part of the premises 100.

Fig. 2 shows a schematic plan view of the premises 100 provided with the security monitoring system 110.

The security monitoring system 110 may include one or more interior sensors for detecting an intruder entering or moving within the premises 100. Such sensors may comprise one or more presence sensors 117, one or more perimeter sensors 118, one or more image sensors 119, or a combination of one or more thereof.

A presence sensor 117 may be defined as a sensor sensitive to the presence of persons and/or objects within an area monitored by the presence sensor. Presence sensors 117 may include motion or passage sensors sensitive to motion or passage of a person and/or object within the premises 100. The presence sensor 117 may thus comprise any type of sensor or detector capable of detecting presence, and/or movement of a person and/or object. For example, the presence sensor 117 may comprise a line-of-sight sensor, a radiation-based sensor for detecting an amount of incident radiation, or the like. In particular, the presence sensor(s) 117 may include an infrared sensor such as a thermal-MOS (TMOS) sensor and/or a passive infrared sensor (also referred to as a PIR sensor). Other examples of presence sensors 117 include photosensors, optical sensors, visual sensors, thermal sensors, radiation-based sensors and/or image capturing means such as a camera.

A perimeter sensor 118, on the other hand, may be defined as a sensor configured to detect persons and/or objects crossing or breaching a perimeter of the premises 100. Exemplary perimeter sensors 118 include magnetic sensors arranged at windows 103 and/or doors 102, and/or glass breakage sensors (such as a shock sensor) for detecting breakage of e.g. a window 103 or glass door 102.

An image sensor 119 may be defines as a sensor comprising imaging means, such as a camera (e.g. a photographic camera), video camera, and/or any other type of type of optical sensing device capable of capturing or acquiring one or more still and/or moving images of its field of view.

The security monitoring system 110 may further comprise one or more alarm indicators 120 such as a visual alarm indicator (e.g. a flashing light), an audible alarm indicator (e.g. a siren), or the like, that may be activated in the event of an alarm-incurring event being detected. The alarm indicators 120 may be arranged in an interior and/or exterior part of the premises.

The security monitoring system 110 may also comprise a control unit 114 as previously mentioned. The control unit may also be referred to as a central unit. The control unit 114, which may generally be mains powered, is coupled or connected to the sensors and is configured to process received signals and determine a response. The sensors may, for example, be provided with wireless (e.g. via Wi-Fi, radio frequency, or the like) and/or wired communication means, such as a radio transceiver, for communicating with the control unit 114.

The control unit 114 may include a processor and an alert triggering unit for providing an alert signal when the security monitoring system 110 is triggered or set off, e.g. when an alarm-incurring event has occurred.

The control unit 114 may be connected to input means 121 allowing a user to interact with the control unit 114. The input means 121 may be a keypad (either an exterior keypad 112 as shown in Fig. 1, or a keypad arranged inside the premises 100) or similar, for arming and disarming the sensors so as to arm and disarm the security monitoring system 110. In the illustrated embodiment, the input means 121 is arranged in the vicinity of the entrance door 102.

The control unit 114 may communicate with one or more user devices 116, which may be almost any kind of electronic device such as a smartphone, tablet, laptop or desktop computer, a smart watch, or even a television. For example, the control unit 114 may communicate with an app or other program installed on such user devices 116 allowing the user to interact with the control unit 114 and/or the security monitoring system 110. The user device 116 may also be loaded with a public land mobile network (PLMN) by means of which the control unit 114 (and/or the remote monitoring centre 115), may communicate with the user device 116. The user device 116, and in particular the app or program installed thereon, may thus form input means to the control unit 114 such that the user can, through the user device 116, instruct the control unit 114 to arm or disarm the security monitoring system 110, or the like. The user device 116 may also provide the user with information relating to a state of the security monitoring system 110 (e.g. if it is in an armed or disarmed state) and/or one or more of its sensors. The security monitoring system 110 may accordingly notify the user via the user device(s) 116 if and when the security monitoring system 110 is set off or triggered.

The app installed on the user device(s) 116 may be used to display still or video images captured by the one or more interior image sensors 119, exterior imaging means 113, or any other sensors, receiving audio from an audio interface 122 (as will be described later), provide position data of the user device 116 on which it is installed to the security monitoring system 110, transmit input data provided by a user to the security monitoring system 110, receive data or signals from the control unit 114 and present such data or signals as notifications (e.g. push notifications).

The control unit 114 may further be connected to the remote monitoring centre 115, which is located remotely from the premises 100. The control unit 114 may accordingly be configured to transmit alert signals to the remote monitoring centre 115, where operators (i.e. human operators) and/or computerised systems manage the alert signals and determines an appropriate action. That is, the control unit 114, typically located in the premises 100, is configured to process notifications and signals received from the sensors, and to notify the remote monitoring centre 115 of at least some of these signals that are indicative of an alarm-incurring event, depending upon the settings of the system and the nature of the detected events. In such a configuration, the control unit 114 at the installation is effectively acting as a gateway between the sensors and the remote monitoring centre 115.

The control unit 114 may be connected to the remote monitoring centre 115 by wires, such as a telephone line, or by a wireless telecommunications system such as GSM or other radio frequency systems. The connection may also be through the internet or any other suitable network.

Hence, operation of the security monitoring system 110 may be controlled by one or more of: the control unit 114, the remote monitoring centre 115, and a security monitoring app installed on the user device 116. For example, the remote monitoring centre 115, if provided, may receive one or more signals from any of the sensors. The remote monitoring centre 115 may transmit commands for controlling any one or more of: the arm state of the security monitoring system 110 (e.g. armed or unarmed), commanding a tripped alarm state to be signalled by the security monitoring system 110 (e.g. by triggering one or more alarm indicators 120 to generate alarm noise), and/or commanding operation of one or more functions of the sensors. Communication with the remote monitoring centre 115 may pass through the control unit 114. In other embodiments without the remote monitoring centre 115, or should communication with the remote monitoring centre 115 be interrupted, operation of the security monitoring system 110 may be controlled by the control unit 114. In yet other embodiments, the control unit 114 may be omitted, and the sensors may instead communicate independently with the remote monitoring centre 115, for example, via wireless communication (such as Cat-M LTE).

Howsoever the communication is implemented, the remote monitoring centre 115 may alert one or more operators of an alarm-incurring event. The one or more operators may monitor communications received from the security monitoring system 110. Thus, the one or more operators may, in response to an alert signal being transmitted, send a patrol unit and/or the emergency services to the premises 100 and/or notify an owner or resident of the premises 100.

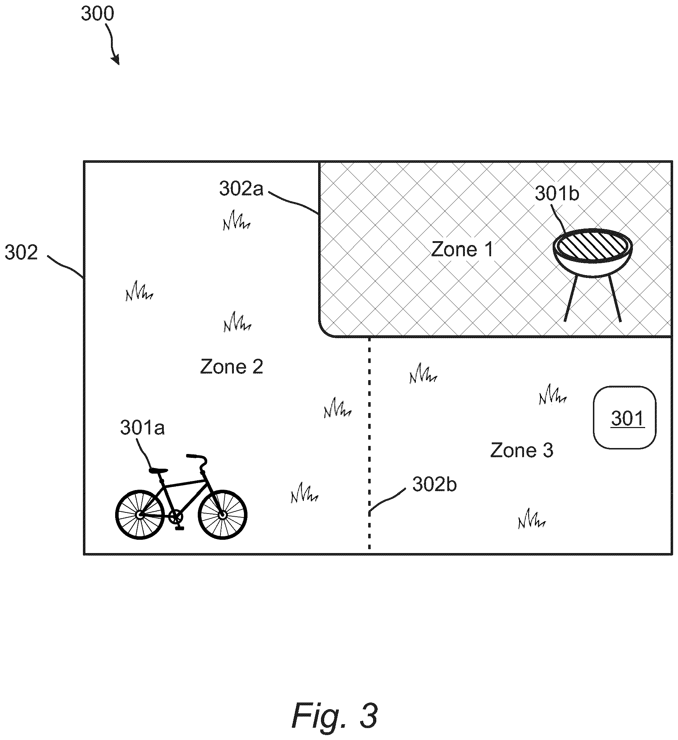

Fig. 3 shows an exterior area 300 of the premises 100 monitored by the exterior imaging means 113. The exterior area 300 may be a back garden of the premises 100 or any other exterior area of the premises 100. For example, the exterior area 300 may comprise a lawn, a patio, a swimming pool, or the like.

A resident or owner of the premises 100 (or any other person associated with the premises 100) may keep one or more objects 301 or assets in the exterior area 300. These objects 301 or assets may also be referred to as externally located objects or externally located assets.

For example, objects 301 that may be kept in the exterior area 300 of the premises 100 may include one or more furniture pieces (e.g. outdoor furniture), one or more bicycles 301a, motorcycles or other vehicles, one or more barbeques 301b or grills, one or more lawnmowers (e.g. robotic lawnmowers), one or more cleaning robots for a swimming pool, one or more heat pumps, one or more ornaments, one or more packages (e.g. left by a delivery person), or any other object that may be at least temporarily stored or kept in the exterior part of the premises. The object(s) 301 may be stationary objects like furniture, moving objects such as lawnmowers, or temporary objects such as a bicycle of a visitor or a package or parcel left by a delivery person.

The security monitoring system 110, and in particular the exterior imaging means 113, may therefore be configured to monitor one or more of these objects 301 kept in the exterior area 300 so as to provide a form of protection of such objects 301 and to trigger an alert if they are stolen or moved.

In particular, the exterior imaging means 113 may be configured to monitor at least part of the exterior area 300 of the premises where such objects 301 are kept. In other words, the exterior imaging means 113 are arranged to include at least part of the exterior area 300 in its field-of-view.

Although reference will generally be made to one exterior area 300 monitored by one exterior imaging means 113, it will be appreciated that there may be several exterior areas 300 of the premises 100 in which objects 301 are kept, each of which being monitored by at least one exterior imaging means 113. Similarly, more than one exterior imaging means 113 may be provided to monitor the same area. For example, one exterior imaging means 113 may be provided to cover an exterior area at the front of the premises, while another exterior imaging means 113 may be provided to cover a back garden of the premises, or the like. In configurations where more than one exterior imaging means 113 are provided, the plurality of exterior imaging means 113 may jointly perform the functions described herein.

The exterior area 300, such as that shown in Fig. 3, may be divided into a plurality of zones. The zones may be defined by one or more boundaries 302, which may be physical boundaries 302a that may be seen and/or recognized in the field of view of the exterior imaging means, and/or one or more user-defined boundaries 302b. Examples of physical boundaries include, but are not limited to, fences, bushes, hedges, edges of one or more lawns, edges of one or more swimming pools, edges of one or more patios (as can be seen in Fig. 3 where zone 1 corresponds to a patio), or the like. These physical boundaries 302a may be identified using image recognition techniques or computer vision techniques on one or more images from the exterior imaging means 113. The user-defined boundaries 302b need not be physically visible, but may alternatively be stored in the system and correspond to virtual boundaries in the field of view of the exterior imaging means 113. For example, the user may define that a boundary 302b should be defined at the middle, say, of the field of view of the exterior imaging means 113, such that the leftmost part of the field of view corresponds to one zone and the rightmost part of the field of view corresponds to another zone. Such virtual boundaries 302b between zones may be defined to correspond to certain sets of pixels within the images from the exterior imaging means 113, or by any other suitable method.

Accordingly, the security monitoring system 110 is configured to store at least one definition of a zone and/or boundary 302 of the exterior area 300 of the premises 100. Such definition may be stored in a memory, for example a memory of the central unit or the exterior imaging means 113.

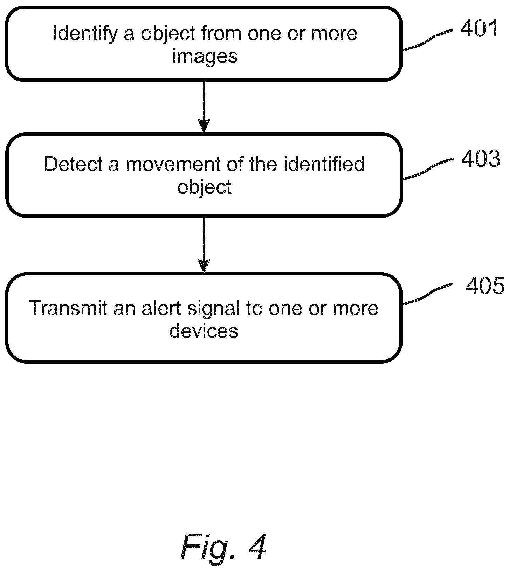

Fig. 4 shows a method of operating the security monitoring system 110, in which the security monitoring system 110 is used for monitoring of one or more externally located objects 301.

In step 401, an object 301 located in an exterior area 300 of the premises 100 is identified by the exterior imaging means 113. The object 301 may be any type of object, including but not limited to one or more furniture pieces (e.g. outdoor furniture), one or more bicycles 301a, motorcycles or other vehicles, one or more barbeques 301b or grills, one or more lawnmowers (e.g. robotic lawnmowers), one or more cleaning robots for a swimming pool, one or more heat pumps, one or more ornaments, one or more packages (e.g. left by a delivery person), or any other object that may be at least temporarily stored or kept in the exterior area 300 of the premises 100.

The exterior imaging means 113 may be configured to identify the object 301 from one or more images obtained by the exterior imaging means 113. The exterior imaging means 113 and/or the security monitoring system 110 (e.g. the control unit) may, for example, be configured to automatically identify the object 301 using object recognition techniques, as will be known to the person skilled in the art.

For example, the user may define one or more objects 301 that the system should look for and is trained to recognize and identify. In particular, the user may, for instance in an app on the user device 116, annotate one or more reference images from the exterior imaging means 113 by indicating object(s) 301 of interest that are present in the images as well as where they are located within the images. The system may thereafter store (e.g. in a memory of the system) one or more characteristics or definitions of said objects 301 of interest allowing the system to identify said objects 301 in future images from the exterior imaging means 113.

Alternatively, or additionally, the system may be configured to recognize, using known object recognition techniques, predefined object groups or object types, such that the system can automatically identify new objects 301 in the images that belong to said object groups or types, e.g. if they have a certain shape, size, color, or other characteristics that is typical to the object type that the system has been trained on. For example, the system may be trained to recognize a bicycle object type, such that the system can identify a bicycle 301\a in the images even if a user has not specifically trained the system on that particular bicycle. Thus, if a visitor to the premises brings a bicycle for temporary storage in the exterior area 300 of the premises 100, the system can recognize it as a bicycle 301a on its own. The system may accordingly store (e.g. in a memory of the system) one or more characteristics or definitions of object types of interest allowing the system to identify objects within said object types in future images from the exterior imaging means 113.

Further, the system may be configured or trained to differentiate between different objects or object types, such that the system can identify both a bicycle 301a and a barbeque 301b, say, in the one or more images. That is, the system may in step 401 identify at least a first object and a second object (optionally also a third object, and/or a fourth object, etc.).

The exterior imaging means 113 may be configured to always stream and/or capture still or moving images. The exterior imaging means 113 may then be configured to continuously or periodically search the images in order to identify any objects of interest in the field of view of the exterior imaging means 113. Alternatively, or additionally, the exterior imaging means 113 may be configured to identify the objects of interest in response to a detected movement, e.g. detected by a movement detector of the security monitoring system 110 or detected by a change between two or more images.

The exterior imaging means 113 may alternatively be configured to obtain images in response to a trigger action. For example, the exterior imaging means 113 may normally be deactivated and then triggered (i.e. activated) in response to a trigger action.

The trigger action may be a detected movement (e.g. of a person or object). The movement may be detected by another sensor of the security monitoring system 110, for example by a movement detector (e.g. a PIR sensor), such as the movement detector associated with the exterior imaging means 113. For example, the movement detector associated with the exterior imaging means 113 may detect a movement or motion. In response to said motion detection, the exterior imaging means 113 may be configured to start capturing or streaming images.

Thus, step 401 may thus comprise detecting a trigger action, obtaining one or more images by the exterior imaging means 113 in response to said trigger action, and identifying an object of interest in the image(s).

In step 403, the security monitoring system 100 determines if there is a movement of one or more of the identified objects 301. The system determines if there is a movement in dependence on one or more images from the exterior imaging means 113.

For example, the security monitoring system 110 may detect, from one or more images from the exterior imaging means 113, that the object 301 is moving and/or has moved (i.e. is no longer in the same position). For example, the system may be configured to (automatically) detect a change in position of the object 301 between two or more image frames. In particular, the system may detect a movement of the object 301 by comparing the location of the object 301 between two or more image frames from the exterior imaging means 113. That is, the system can detect a movement if the object 301 is not within the same portion (or the same pixels) of two or more image frames. Furthermore, the system may detect movement if the object 301 no longer appears in the images, in which case it can be deduced that the object 301 has been moved out of the field of view of the exterior imaging means 113.

Step 403 may include the detection of any movement of the object 301, irrespective of movement direction or movement distance.

Alternatively, or additionally, step 403 may comprise determining if the movement is a movement of at least a predetermined distance. Thus, small accidental movements (e.g. due to wind or the like) may not trigger the system.

Alternatively, or additionally, step 403 may comprise determining if the movement is a movement of the object 301 into another zone of the exterior area 300. Here it is noted that, as explained in relation to Fig. 3, the system can recognize different zones defined by one or more physical and/or virtual boundaries 302. Thus, by considering the position of the object 301 in relation to said zones and/or boundaries 302, the system may determine if the object 301 has been moved from one zone into another zone.

Hence, movement of an object 301 within a zone may not trigger the alarm. For example, a barbeque 301b may be moved within a zone corresponding to a patio (which may be expected during normal use of the barbeque 301b), while if the barbeque 301b is moved away from the patio, such movement is indicative of potential suspect behavior and an alert may accordingly be triggered.

In step 405, the security monitoring system 110 generates and/or transmits an alert signal if (i) it is determined in step 403 that the object 301 has been moved, (ii) if it is determined in step 403 that the object 301 has been moved by at least a predetermined distance, and/or (iii) if it is determined in step 403 that the object 301 has been moved away from its "normal" zone (e.g. into another zone). In other words, an alarm is triggered by the system, because it is likely that the object 301 has been unauthorizedly moved. This step may include transmitting the alert signal to the remote monitoring centre 115, sending an notification to a user device 116, triggering an alarm indicator 120 arranged in an interior part of the premises 100 (so as to notify a person within the premises 100), triggering an alarm indicator 120 arranged in an exterior part of the premises 100 (so as to notify whoever is moving the object 301 that the system is aware thereof), or the like to alert a user or operator that an object 301 has been (unauthorizedly) moved and/or is being (unauthorizedly) moved.

The action taken by the system in step 405 may depend on a time of day when the movement of the object 301 is detected. For example, if the movement occurs during nighttime, during which a user is not normally expected to move any objects 301 in the garden or the like, the system may trigger an alarm indicator 120 and/or notify the remote monitoring centre 115, while the system, if the movement occurs during daytime, when a user may occasionally move the object(s) 301 themselves, the system may take a less urgent action such as notifying one or more user devices 116.

Accordingly, step 405 may comprise determining a current time of day, determining if the time is within a predefined time span, and select a first and/or second action in dependence on whether the time is within the predefined time span. The predefined time span may correspond to a time during which a user is not normally expected to move any objects 301 in the garden or the like. This may be a nighttime such as between 00:00 - 04:00, optionally between 23:00 - 05:00, optionally between 22:00 - 06:00. The predefined time span may be adjustable by a user of the system to conform with their habits/lifestyle/schedule etc.

Although the exterior imaging means 113 have generally been described as a video camera, it will be appreciated that the exterior imaging means 113 may, in other embodiments, be a still picture camera or other imaging device. Instead of capturing or streaming a sequence of moving images, the still picture camera may be configured to capture still images. The remaining handling, analysis, calculations, determinations, triggerings, notifications and the like will still correspond to the above described, with possible adjustments for the image being a still image instead of a moving image, which adjustments would be familiar to the person skilled in the art.

The various embodiments described above are provided by way of illustration only and should not be construed to limit the invention. For example, the principles herein may be applied to any alarm system or security monitoring system, even if it only includes some of the sensors described. Those skilled in the art will readily recognize various modifications and changes that may be made to the present invention without following the example embodiments and applications illustrated and described herein, and without departing from the scope of the present disclosure.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

## Claims

1. A method of operating a security monitoring system of a premises, the method comprising:
identifying an object by an imaging means arranged in an exterior part of the premises;
detecting a movement of the object in dependence on one or more images from the imaging means; and
transmitting an alert signal to one or more devices.

2. The method according to claim 1, wherein the object is an object located in an exterior area of the premises.

3. The method according to claim 1 or 2, wherein the object comprises one or more furniture pieces, one or more bicycles, one or more motorcycles, one or more vehicles, one or more barbeques, one or more grills, one or more lawnmowers, one or more cleaning robots for a swimming pool, one or more heat pumps, one or more ornaments, one or more packages, or any combination thereof.

4. The method according to any preceding claim, wherein the alert signal is transmitted in response to the detected movement.

5. The method according to any preceding claim, wherein the method further comprises determining if the movement is a movement of at least a predetermined distance.

6. The method according to claim 5, wherein the alert signal is transmitted if it is determined that the movement is a movement of at least the predetermined distance.

7. The method according to any preceding claim, wherein the method further comprises determining if the movement is a movement from a first zone of the exterior area to a second zone of the exterior area.

8. The method according to claim 7, wherein the alert signal is transmitted if it is determined that the movement is a movement from the first zone to the second zone.

9. The method according to any preceding claim, wherein the one or more devices comprise one or more devices of a remote monitoring centre, one or more user devices, one or more alarm indicators arranged in an interior or exterior part of the premises, or any combination thereof.

10. The method according to any preceding claim, wherein the method further comprises:
determining a current time of day,
determining if the determined time of day is within a predefined time span, and
selectively transmitting the alert signal to one or more first devices or one or more second devices in dependence on the determined time of day being within the predefined time span.

11. The method according to any preceding claim, wherein the method comprises:
receiving, from a user, a definition of the object to be identified and/or an object type to which the object to be identified belongs; and/or
storing a definition of the object to be identified and/or an object type to which the object to be identified belongs.

12. A security monitoring system for monitoring a premises, the system comprising:
at least one imaging means arranged in an exterior part of the premises, wherein the imaging means is configured to obtain one or more images of its field of view;
wherein the security monitoring system is configured to perform the method according to any one of claims 1 to 11.

13. The security monitoring system according to claim 12, wherein the system is configured to store one or more definitions of one or more zones and/or boundaries within an exterior part of the premises.

14. The security monitoring system according to claim 12 or 13, wherein the system is configured to store one or more characteristics or definitions of one or more objects and/or object types.
